# EUROPÄISCHE PATENTSCHRIFT

(11) **EP 3 369 298 B1**
(45) Veröffentlichungstag und Bekanntmachung des Hinweises auf die Patenterteilung: **18.12.2019**
(21) Anmeldenummer: 18159998.6
(22) Anmeldetag: 05.03.2018
(51) Int. Cl.: A01C 3/00, C05F 3/00, C05D 3/02

(54) **VERFAHREN ZUR GERUCHSREDUZIERUNG UND VERARBEITUNG VON TIEREXKREMENTEN**
METHOD FOR REDUCING ODOUR AND PROCESSING ANIMAL EXCREMENT
PROCÉDÉ DE RÉDUCTION D'ODEURS ET DE TRAITEMENT D'EXCRÉMENTS D'ANIMAUX

(30) Priorität: 03.03.2017 DE 102017104529
(43) Veröffentlichungstag der Anmeldung: 05.09.2018
(73) Patentinhaber: Steen, Manfred, 27211 Bassum (DE)
(72) Erfinder:
(74) Vertreter: Eisenführ Speiser

(56) Entgegenhaltungen:
- DE-A1-102004 057 841
- JP-A- H04 114 985
- US-A- 5 215 267
- Gregory K Evanylo ET AL: "ON FARM COMPOSTING: A GUIDE TO PRINCIPLES, PLANNING AND OPERATIONS", , 8. August 2014 (2014-08-08), XP055491385, Virgina State University Gefunden im Internet: URL:https://www.researchgate.net/publicati on/237698064 [gefunden am 2018-07-10]
- Pierre Benoît ET AL: "Valorisation des feuilles mortes issues", , 30 September 2010 (2010-09-30), XP055605099, Retrieved from the Internet: URL:http://www.environnement.gouv.qc.ca/ma tieres/articles/valo-feuilles-mortes-collm un.pdf [retrieved on 2019-07-12]

## Beschreibung

Die Erfindung betrifft ein Verfahren zur Verarbeitung von Tierexkrementen, insbesondere Gülle von Schweinen, Rindern, Geflügel oder dergleichen. Derlei Tierexkremente (auch "Gülle" genannt) fallen in der Massentierhaltung in großem Umfang an und werden regelmäßig in großen Behältern, Gülletanks, Güllesilos, Güllebunker, etc. aufgefangen und gesammelt.

Als Stand der Technik wird allgemein insbesondere hingewiesen auf JP-04114985, CN 106242734, CN 106278647, DE 102004057841, DE 1005534, DE 102008019299 sowie "New Phytologiest (2011) 191: 132-145 (www.newphytologist.com) "Changes in the structural composition and reactivity of Acer rubrum leaf litter tannins exposed to warming and altered precipitation: climatic stress-induced tannins are more reactive".

Gregory K Evanylo et al: "ON FARM COMPOSTING: A GUIDE TO PRINCIPLES, PLANNING AND OPERATIONS" offenbart ein Verfahren zum "On farm composting". US 5,215,267 beschreibt den Aufbau einer Komposteinrichtung um biologisch abbaubare Materialien zu kompostieren.

Da regelmäßig die in der Massentierhaltung entstehende Gülle nicht sofort als Dünger in der Landwirtschaft eingesetzt werden kann, weil zum Beispiel die entsprechenden Gülleverordnungen einzelner Länder den Austrag der Gülle in den Wintermonaten, zum Beispiel vom 1. November bis 1. Februar nicht erlaubt, müssen große Güllemengen in der Massentierhaltung gespeichert werden. Bereits bei dieser Speicherung entstehen große Mengen an unangenehmen Gerüchen, Gasen, etc., die in nicht geringem Maße auch die Umwelt belasten und vor allem in der Nähe von menschlichen Siedlungen der dortigen Bevölkerung kaum mehr zuzumuten sind.

Es ist bereits bekannt, Gülle auf bekanntem Wege zu sammeln, zum Beispiel in Gülletanks, und dann diese Gülle auch zu trocknen.

Die Gülle weist, je nach Tierhaltungsart wie auch Tierhaltungsform, dabei unterschiedliche Mengen an Wasser auf und regelmäßig liegt der Wassergehalt in den tierischen Exkrementen/Gülle bei über 70% (Gewichtsprozent), abhängig von der Gülleart auch bis zu 95%, sodass ein großer Aufwand betrieben werden muss, um die Gülle letztlich auf 10% oder weniger zu trocknen. Zu diesem Aufwand gehört auch ein hoher Energieeinsatz.

Oftmals beträgt der Wassergehalt in der Gülle sogar 90% und mehr und die für die Trocknung erforderliche Energie wird regelmäßig von Biogasanlagen bzw. deren Abwärme bereitgestellt.

Aber auch die dann auf z.B. 10 - 15% getrockneten Überreste, also die Festbestandteile der Gülle, stellen immer noch eine sehr starke Geruchsbelästigung dar und müssen sehr aufwendig gelagert bzw. versiegelt werden, damit die Umwelt nicht zu sehr unter dieser Geruchsbelästigung leidet.

Hier setzt die Erfindung an, denn es ist Ziel der Erfindung, die Geruchsbelästigung von gelagerter Gülle einerseits, wie auch von getrockneter Gülle andererseits, zu reduzieren.

Diesbezüglich wurden schon viele Vorschläge gemacht, insbesondere auch in Verbindung mit verschiedensten chemischen Erzeugnissen, was letztlich aber nicht befriedigend ist, weil durch die Eingabe von chemischen Zusätzen dies oftmals auch eine spätere Belastung der Böden, auf denen die Gülle (sei es in flüssiger oder getrockneter Form) ausgebracht wird, nach sich zieht.

Die Erfindung schlägt ein Verfahren gemäß Anspruch 1 vor. Vorteilhafte Weiterbildungen sind in den Unteransprüchen und in der Beschreibung angegeben.

Demgemäß wird der Gülle bereits in der Flüssigphase Laub (von Laubbäumen) beigemengt.

Dieses Laub fällt bislang in großem Umfang regelmäßig im Herbst an und muss beispielsweise von Städten, Gemeinden aber auch Privatunternehmen, wie auch Privathäusern aufwendig gesammelt und entsorgt werden.

Dies stellt insbesondere für Städte im Übrigen eine hohe Kostenbelastung dar, die nicht relevant gemindert wird, wenn das gesammelte Laub Verbrennungsanlagen zugeführt wird.

Es ist auch bekannt, Biogasanlagen ebenfalls Gülle und Laub zuzuführen. Dort stellt sich das Geruchsproblem aber insoweit nicht, weil der gesamte Bioprozess in einer abgeschlossenen Atmosphäre stattfindet, die Gülle auch energetisch genutzt wird und im Ergebnis können solche Biogasanlagen ohnehin nur relativ geringe Mengen an Gülle einerseits, wie auch Laub aufnehmen, weil letztlich der Wassergehalt in der Gülle viel zu hoch ist.

Durch Tests wurde herausgefunden, dass sich bereits bei einem Zusatz von 5 - 50% (bezogen auf die Güllemasse) Laub zur Gülle eine erhebliche, teilweise vollständige Geruchsminimierung einstellt. Das Überraschende dabei, das sich die Geruchsänderung quasi schlagartig einstellt, d.h. dann, sobald das Laub mit der Gülle vermengt wird. Dies konnte in einem Test nachgewiesen werden. Das Laub wird dabei vor dem Zusatz und der Vermengung mit der Gülle vorbehandelt, indem es zerkleinert wird, auf eine Teilchengröße von 3 - 15 Millimeter, vorzugsweise 5-10 Millimeter oder besonders bevorzugt 5-7 Millimeter.

Die Zerkleinerung kann mit bekannten Technologien stattfinden, zum Beispiel in einer Mühle, in der das Laub auf die gewünschte Korn- bzw. Teilchengröße vermahlen wird.

Die Teilchengröße (Länge und/oder Breite) des zerkleinerten Laubs liegt im Bereich von 3 - 15 Millimeter. Die vorgenannte Teilchengröße bedeutet, dass circa 80 - 90% des Laubes Teilchengröße aus dem vorbeschriebenen Bereich aufweisen, es also auch Restbestandteile des Laubes gibt, die kleiner sind oder zum Teil etwas größer als der angegebene Bereich sind.

Es ist auch möglich, dass die Zerkleinerung unmittelbar vor der Vermengung mit der Gülle stattfindet und somit die Anlage bzw. Vorrichtung zur Zerkleinerung des Laubs Teil der Anlage bzw. Vorrichtung ist, mittels der das Laub mit der Gülle vermengt wird.

Eine Zerkleinerung des Laubes hat im Übrigen den Vorteil, dass bei der Vermengung des Laubes mit Gülle das in der Gülle enthaltene kontaminierte Wasser schneller und zuverlässiger gebunden werden kann.

Das zugesetzte Laub ist darüber hinaus vor oder bei oder nach der Zerkleinerung auf einen gewünschten, vorbestimmten Feuchtigkeitsgrad herunter getrocknet, der Restfeuchtegehalt liegt im Laub vor der Beimengung von Gülle bei 5-17%, bevorzugt bei 10-15%.

Es ist vorteilhaft, wenn für die Trocknung des Laubes Wärme der Biogasanlage oder dergleichen benutzt wird, insbesondere solche Abwärme, die sich prozessual kaum mehr nutzen lässt.

Wenn das entsprechend vorbehandelte Laub der Gülle im Güllebehälter zugesetzt wird, wird es anschließend mit der dort vorhandenen Gülle vermengt, zum Beispiel mittels einer Misch- oder Rühreinrichtung.

Bei der Misch- und Rühreinrichtung kann es sich um einen Durchlaufmischer handeln, indem für die optimale Vermengung bzw. Vermischung von Gülle und Laub gesorgt wird. Durch Tests wurde herausgefunden, dass die Erfindung eine drastische und sehr schnelle Minimierung bzw. Verringerung der Geruchsbelästigung erzielt wird, z.B. innerhalb von weniger als 60 Sekunden, z.B. 10 Sekunden.

In Tests wurde herausgefunden, dass sich der erfindungsgemäße Effekt dann besonders gut einstellt, wenn auch das Mischungsverhältnis von Gülle einerseits und Laub andererseits zutreffend eingestellt wird, wobei das Laub-Gülle-Mischungsverhältnis auch sehr vom Wassergehalt der Gülle abhängt.

Bei einer Gülle von circa 90% Wassergehalt wurde das bestmögliche Mischungsverhältnis, also der erfindungsgemäße Effekt der Geruchsminimierung optimal erzielt bei einem Mischungsverhältnis im Bereich von 5 Teile Gülle auf 1 Teil Laub bzw. auf ein Kilogramm Gülle auf 0,2 Kilogramm Laub.

Andere, mit davon abweichenden Verhältnissen sind aber die Erfindung auch erfolgreich möglich, beispielsweise auch dann, wenn z.B. der Laubanteil pro Kilogramm Gülle im Bereich von 50 Gramm liegt. Das dabei eingesetzte Laub stammte von Mitteleuropäischen Laubbäumen, wenn möglich fanden sich keine (oder kaum) Nadeln von Nadelbäumen darunter, wobei das Laub auf Grund der üblichen Staubbelastung oder andere Fremdstoffe (auch kleine Äste, Zweige, etc.) niemals einen 100% hohen Reinheitsgrad aufweisen, sondern 80 - 95% oder darüber.

Das Messungsverhältnis Gülle zu Laub wird bevorzugt so eingestellt, dass durch die Laubbeimischung das in der Gülle enthaltene Wasser weitgehend gebunden wird und somit nicht wie bisher bei der Gülleausbringung auf dem Feld in das Grundwasser gelangt und somit zur Stickstoffbelastung des Grundwassers beiträgt.

Wenn der Wassergehalt der Gülle größer ist als 90%, somit auch das Mischungsverhältnis eingehend geändert werden, dass dann der Laubanteil vergrößert wird, um somit, wie erwähnt, dass in der Gülle enthaltene kontaminierte Wasser mit dem Laub zu binden.

Dies kann in nicht erfindungsgemäßen Extremfällen auch dazu führen, dass ein etwa gleiches Mischungsverhältnis Gülle zu Laub vorliegt oder der Anteil der Gülle zum Anteil des Laubes bei etwa 1:1 bzw. 2:1 liegt.

Das Mischungsverhältnis Gülle zu Laub kann geändert werden, je nach dem welchen Feuchtigkeitsgehalt das Laub aufweist. Je trockener dabei das Laub ist, je geringer also der Feuchtigkeitsgehalt des Laubes, umso weniger kann der Anteil des Laubes ausmachen und anders herum, je feuchter das Laub ist, umso höher kann der Laubanteil in der Gesamtmischung Gülle zu Laub ausfallen.

Die Reduzierung der Geruchsbelästigung gilt sowohl für das flüssige/breiige Gülle-Laub-Gemisch einerseits, wie auch dann, wenn das Gemisch insgesamt herunter getrocknet wird, beispielsweise auf ein Trockenheitsgrad von unter 15%, vorzugsweise unter 10%.

Zur Trocknung des Gülle-Laub-Gemisches kann wiederum Abwärme der Biogasanlage eingesetzt werden oder andere Wärmeerzeuger (z.B. auch aus Heizungsanlagen), deren Abwärme sich ansonsten kaum mehr anders prozessual nutzen lässt.

Da es sich bei Laub um ein reines Bioprodukt handelt, ist die spätere Ausbringung des Gülle-Laub-Gemisches als Dünger in der Landwirtschaft auch völlig unproblematisch und benötigt auch keine Sondergenehmigung.

Da das Laub in zerkleinerter Form vorliegt, ist es auch für den Ackerboden einfacher, die noch im Laub befindlichen Restnährstoffe sich selbst nutzbar zu machen.

Die Erfindung ermöglicht mithin nicht nur eine substantielle Reduktion der Geruchsbelästigung einerseits, sondern zeigt auch eine völlig neue Verwendung des gerade in den Herbstmonaten auf der Nordhalbkugel anfallenden riesigen Laubmengen an, insbesondere des Laubes, welches in den bevölkerungsreichen Gebieten anfällt, da dieses dort regelmäßig ohnehin aufgesammelt werden muss mittels entsprechender Kehrmaschineneinrichtungen und in den urbanen Gebieten oftmals große Flächen bislang vorgehalten werden müssen, um das Laub auf den Flächen wenigstens zwischenzulagern.

Ein besonderer Vorteil besteht auch darin, dass der Anfall des Laubes zeitlich mehr oder weniger synchronisiert ist mit der Zeit, in der die Gülle, die in der industriellen Massentierhaltung anfällt, nicht mehr als Dünger auf die Flächen verbracht werden darf.

Selbstverständlich ist es erfindungsgemäß auch möglich, in besonderen Fällen sogar besonders vorteilhaft, wenn zusätzlich zu dem Laub auch noch weitere Zusatzstoffe mit in die Gülle (in der Nass- und Trockenphase) hineingegeben werden. Dies können zum Beispiel mineralische Zusatzstoffe sein, zum Beispiel Kalk, Phosphat, Mangan oder andere Düngebestandteile oder Düngerzusammensetzungen. Diese würden dann bei Vermengung zusammen mit dem Laub in der Gülle sich unter Umständen schon bereits auflösen und wären somit bei der Aufbringung des Gülle-Laub-Gemisches bereits in dem Trockendünger enthalten, sodass eine weitere Ausbringung von künstlichen Düngemitteln erspart bleiben könnte.

Die dann vermengten Zusatzstoffe können aber auch andere technische Funktionen haben, zum Beispiel Stabilisierung des Trockengülle-Laub-Gemisches, noch weitere Geruchsreduzierungen, Haltbarmachung des Trockengülle-Laub-Gemisches, etc.

Aus DE 102004057841 ist es bekannt, dass aus Gülle zunächst ein Güllefeststoff (Formkörper) erzeugt wird, welcher eine Restfeuchte von 12-14 Gew% aufweisen soll und welcher bevorzugt als Pellet produziert wird.

Über das beschriebene Mischungsverhältnis zwischen Gülle einerseits und Laub andererseits, kann auch der Laubanteil jederzeit erhöht werden, das aber nicht über das in Anspruch 1 definierte Mischverhältnis hinausgeht.

Anders als im Stand der Technik wird darüber hinaus mit der Erfindung erreicht, dass das in der Gülle enthaltene "kontaminierte Wasser" mit dem Laub gebunden wird und somit nicht zwangsläufig auf eine aufwendige Trocknung der Gülle gemäß dem Stand der Technik erforderlich ist.

Soweit im Stand der Technik im Übrigen schon einmal beschrieben wurde, gepflückte Teeblätter mit Tierexkrementen zu vermengen, sei darauf hingewiesen, dass Teeblätter nicht die Definition an Laub gemäß der vorliegenden Anmeldung erfüllen. Teeblätter werden nämlich regelmäßig gepflückt, während Laub von den Bäumen fällt und wenn dies passiert, hat bereits der laubabwerfende Baum bestimmte Nährstoffe dem einzelnen Blatt und somit dem Laub entzogen, um für die kommende Vegetationsperiode gut vorbereitet zu sein. Wenn hingegen Teeblätter gepflückt werden, so ist das Teeblatt als solches nach dem Pflückvorgang völlig vital, enthält also sehr viel Feuchtigkeit und mit dem Pflücken werden somit auch dem Teestrauch Nährstoffe entzogen, die durch den Pflückvorgang nicht mehr reversibel in die Strauchpflanze zurück verlagert werden können, wie dies bei Laubbäumen, die im Herbst regelmäßig ihr Laub abwerfen, der Fall ist.

Selbstverständlich ist es auch möglich, dass das Mischungsverhältnis Tierexkremente zu Laub derart ausgebildet ist, dass der Laubanteil größer ist als der Anteil der Tierexkremente, aber nicht über das in Anspruch 1 definierte Mischverhältnis hinausgeht. Dies setzt dann allerdings bei großen anfallenden Mengen von Tierexkrementen (Gülle) auch entsprechend das Ansammeln großer Laubmengen voraus. Liegt der Laubanteil über dem Anteil der Tierexkremente, führt dies selbstverständlich auch zu einer Geruchsreduzierung und Funktionieren des erfindungsgemäßen Verfahrens.

## Patentansprüche

1. Verfahren zur Geruchsreduzierung und Verarbeitung von Tierexkrementen, welche einen Wasseranteil von über 70% in Gewichtsprozenten, vorzugsweise mehr als 90% aufweisen, vorzugsweise Gülle von Schweinen, Rindern oder Geflügel, wobei die Tierexkremente in einem Behälter gelagert werden und dem Behälter gesammeltes Laub, welches von Laubbäumen stammt und welches jahreszeitlich bedingt von den Bäumen gefallen ist, zugeführt wird, welches vorbehandelt ist, nämlich dergestalt, dass das Laub in zerkleinerter Form vorliegt und eine Teilchengröße aufweist, die im Bereich von 3 - 15 Millimeter liegt, vorzugsweise im Bereich von 5 - 10 Millimeter, wobei das Laub vor oder bei oder nach der Zerkleinerung auf den gewünschten, vorbestimmten Feuchtigkeitsgrad von 5-17% in Gewichtsprozenten heruntergetrocknet wird und mit den Tierexkrementen vermengt bzw. vermischt wird, zum Beispiel mittels einer Misch- der Rühreinrichtung und wobei das Mischungsverhältnis zwischen Tierexkrementen einerseits und Laub anderseits ein vorbestimmtes Verhältnis ist, das im Bereich von 20:1 bis 5:1 in Gewichtsprozenten liegt.

2. Verfahren nach Anspruch 1, **dadurch gekennzeichnet, dass** bei steigendem Wasseranteil in den Tierexkrementen auch der Laubanteil im Mischungsverhältnis ansteigt.

3. Verfahren nach einem der vorhergehenden Ansprüche, **dadurch gekennzeichnet, dass** nach der Vermengung der Tierexkremente mit dem Laub die daraus entstandene Masse auf circa 10 - 17%, vorzugsweise circa 15% oder etwas herunter getrocknet wird.

## Claims

1. Method for the odour reduction and processing of animal excrements which comprise a water content exceeding 70% in percent by weight, preferably more than 90%, preferably liquid manure from pigs, cattle or poultry, wherein the animal excrements are stored in a container and collected foliage, which originates from deciduous trees and which has fallen from the trees seasonally, is supplied to the container, which is pretreated, namely in such a way that the foliage is in crushed form and has a particle size which is in the range of 3 - 15 millimetres, preferably in the range of 5 - 10 millimetres, wherein the foliage is dried down to the desired, predetermined degree of moisture of 5 - 17% in percent by weight before or during or after crushing and is mixed or blended with the animal excrements, for example by means of a mixing device or a stirring device, and wherein the mixing ratio between animal excrements on the one hand and foliage on the other hand is a predetermined ratio which is in the range from 20:1 to 5:1 in percent by weight.

2. Method according to claim 1, **characterized in that** with increasing water content in the animal excrements also the proportion of foliage in the mixing ratio rises.

3. Method according to one of the preceding claims, **characterized in that** after the animal excrements have been mixed with the foliage, the resultant mass is dried to approximately 10 - 17%, preferably approximately 15% or slightly down.

## Revendications

1. Procédé de réduction d'odeurs et de traitement d'excréments d'animaux, lesquels présentent une fraction en eau supérieure à 70 % en pourcentage en poids, de préférence supérieure à 90 %, de préférence de lisier de porcs, de bovins ou de volailles, dans lequel les excréments d'animaux sont entreposés dans un contenant et des feuillages collectés, lesquels proviennent d'arbres feuillus et lesquels sont tombés des arbres en fonction des saisons, sont amenés au contenant, lesquels sont traités au préalable, à savoir de telle manière que les feuillages se présentent sous une forme broyée et présentent une granulométrie qui se situe dans la plage de 3 - 15 millimètres, de préférence dans la plage de 5 - 10 millimètres, dans lequel les feuillages sont séchés, avant ou pendant ou après le broyage, jusqu'à obtenir le degré d'humidité souhaité prédéfini de 5 - 17 % en pourcentage en poids et sont combinés ou mélangés aux excréments d'animaux, par exemple au moyen d'un dispositif de mélange ou d'agitation, et dans lequel le rapport de mélange entre des excréments d'animaux d'une part et des feuillages d'autre part est un rapport prédéfini, qui se situe dans la plage de 20:1 à 5:1 en pourcentage en poids.

2. Procédé selon la revendication 1, **caractérisé en ce que**, lorsque la fraction en eau dans les excréments d'animaux augmente, la fraction en feuillages augmente également dans le rapport de mélange.

3. Procédé selon l'une quelconque des revendications précédentes, **caractérisé en ce qu'**après la combinaison des excréments d'animaux et des feuillages, la masse en résultant est séchée jusqu'à environ 10 - 17 %, de préférence environ 15 % ou légèrement en dessous.
